# EUROPÄISCHE PATENTSCHRIFT

(11) **EP 2 851 242 B1**
(45) Veröffentlichungstag und Bekanntmachung des Hinweises auf die Patenterteilung: **13.06.2018**
(21) Anmeldenummer: 14186050.2
(22) Anmeldetag: 23.09.2014
(51) Int. Cl.: B60R 1/00

(54) **SICHTSYSTEM**
VISION SYSTEM
SYSTÈME DE VISION

(30) Priorität: 24.09.2013 DE 102013015847
(43) Veröffentlichungstag der Anmeldung: 25.03.2015
(73) Patentinhaber: MEKRA LANG GmbH & Co. KG, 91465 Ergersheim (DE)
(72) Erfinder: Dr. Lang, Werner, 91465 Ergersheim (DE)
(74) Vertreter: Kramer Barske Schmidtchen Patentanwälte PartG mbB

(56) Entgegenhaltungen:
- EP-A1- 2 623 374
- WO-A1-2014/094941
- DE-A1-102007 044 535
- DE-A1-102008 029 916
- DE-C2- 10 017 072

## Beschreibung

Die vorliegende Erfindung betrifft ein Sichtsystem für ein Fahrzeug, insbesondere für ein Nutzfahrzeug oder einen Kleintransporter bzw. ein solches Fahrzeug, bei dem eine direkte Sicht oder indirekte Sicht mittels eines Spiegels durch ein Heckfenster des Fahrzeugs in den hinter dem Fahrzeug liegenden Bereich nicht möglich ist.

DE 100 17 072 C2 betrifft ein Hecküberwachungssystem für ein Fahrzeug, und insbesondere ein Hecküberwachungssystem zum Detektieren eines anderen Fahrzeugs, welches sich dem eigenen Fahrzeug während des Fahrens des Fahrzeugs nähert, unter Verwendung eines von einer in/an dem Fahrzeug angebrachten Kamera aufgenommenen Bildes und zum Ausgeben einer Warnung an den Fahrer.

Bei Kraftfahrzeugen, die ein Heckfenster aufweisen, ist es üblich, dass ein Innenspiegel vorgesehen ist, mittels dessen der auf dem Fahrersitz sitzende Fahrer den hinter dem Fahrzeug liegenden Bereich einsehen kann, ohne sich umdrehen zu müssen. Wünscht er direkte Sicht, beispielsweise bei einer Rückwärtsfahrt, so ist dies durch einen Blick durch das Heckfenster ebenfalls möglich. Darüber hinaus offenbart EP 2 623 374 A1 ein Sichtsystem für Nutzfahrzeuge zur Darstellung von gesetzlich vorgeschriebenen Sichtfeldern eines Hauptspiegels und eines Weitwinkelspiegels.

Auch bei Nutzfahrzeugen oder Kleintransportern oder Fahrzeugen, die kein solches Heckfenster aufweisen oder wenn dieses vorübergehend versperrt ist, so dass eine direkte Sicht in den hinter dem Fahrzeug liegenden Bereich nicht möglich ist, ist aus Sicherheitsgründen eine möglichst umfassende Sicht in den hinter dem Fahrzeug liegenden Bereich wünschenswert. Da eine Sicht durch den Heckbereich des Fahrzeugs versperrt bzw. nicht möglich ist, werden gewöhnlicherweise Spiegel seitlich am Fahrzeug derart vorgesehen, dass sie einen möglichst guten Einblick in den hinter dem Fahrzeug liegenden Bereich geben.

Allerdings ist die indirekte Sicht mittels Außenspiegel in den hinter dem Fahrzeug liegenden Bereich bei Nutzfahrzeugen bzw. bei Fahrzeugen ohne Heckfenster oftmals unzureichend und es sind tote Winkel vorhanden. Andererseits ist es beispielsweise gerade bei Rückwärtsfahrten oder beim Ansteuern von Laderampen oder Ähnlichem mit einem Nutzfahrzeug oder beim (Rückwärts-) Einparken mit einem Fahrzeug ohne Heckfenster nicht nur aus Sicherheitsaspekten, sondern auch zur effizienten Handhabung des Be- und Entladevorgangs bzw. des Einparkvorgangs wünschenswert, den hinter dem Fahrzeug liegenden Bereich für den Fahrer zu jedem Zeitpunkt, auch wenn der Fahrer am Fahrersitz in normaler Position sitzt, gut einsehbar zu machen, so dass ihm das Rückwärtsfahren erleichtert wird und er jederzeit den hinter dem Fahrzeug liegenden Bereich möglichst vollständig einsehen kann und z.B. in diesem Bereich vorhandene Hindernisse zuverlässig erkennen kann.

Um den hinter dem Fahrzeug liegenden Bereich möglichst umfassend einsehbar zu machen, wird bei Fahrzeugen ohne direkte Sicht durch den Heckbereich beispielsweise ein geteilter Außenspiegel eingesetzt, bei dem neben dem üblichen Außenrückspiegel ein zweiter Spiegel oder ein Spiegelsegment für die Überwachung des sogenannten toten Winkelbereichs dient. Diese Spiegel sind in der Regel kleiner und gewähren oft nur eine Einsichtnahme in einen relativ kleinen Bereich des toten Winkels. Auch ist dieser Spiegel als Weitwinkelspiegel in der Regel stärker gewölbt, was gegenüber dem gewöhnlichen Außenspiegel zu einer verzerrten Abbildung führt und zur Folge hat, dass der ungeübte Fahrer Schwierigkeiten hat, Entfernungen oder relative Lagen von etwaigen Hindernissen in dem abgebildeten Bereich richtig einzuschätzen und Hindernisse zu erkennen.

Es sind daher Rückfahr-Kamerasysteme bekannt, mit deren Hilfe der hinter dem Fahrzeug liegende Bereich aufgenommen und für den Fahrer des Fahrzeugs auf einer Wiedergabeeinheit einsehbar dargestellt wird. Dabei kann auch der tote Winkelbereich hinter dem Fahrzeug erfasst werden.

Ein solches Rückfahr-Kamerasystem ist beispielsweise in der DE 10 2012 005 277 B3 offenbart. Das in der DE 10 2012 005 277 B3 vorgeschlagene Heckbereichssichtsystem für ein Fahrzeug weist eine Aufnahmeeinheit auf, die angepasst ist, Bilder eines Bereichs hinter dem Fahrzeug zu erfassen. Ferner weist das Heckbereichssystem eine Bildverarbeitungseinheit auf, die dem durch die Aufnahmeeinheit erfassten Bild einen Fahrzeugbezug derart überlagert, dass ein virtuelles Bild mit einem überblendeten Fahrzeugbezug erzeugt wird, das mittels einer Wiedergabeeinheit im Fahrerraum des Fahrzeugs angezeigt wird.

Solche aus dem Stand der Technik bekannte Rückfahr-Kamerasysteme sind meist für die Sicht in den Nahbereich hinter dem Fahrzeug ausgelegt, wobei es deren Auflösung und Bildbereich in der Regel nicht erlaubt, ferne Fahrzeuge hinsichtlich ihres Abstandes und ihrer Geschwindigkeit einzuschätzen oder überhaupt darzustellen.

Davon ausgehend ist es die Aufgabe der Erfindung, ein Sichtsystem für ein Fahrzeug vorzuschlagen, mit dem in jeder Fahrsituation wie Vorwärts- oder Rückwärtsfahrt derjenige hinter dem Fahrzeug liegende Bereich einsehbar ist, der für die jeweilige Fahrsituation relevant ist.

In der Beschreibung dieser Erfindung beziehen sich Richtungsangaben auf ein Kraftfahrzeug bei normaler Vorwärtsfahrt. In seitlicher Richtung bedeutet somit diejenige Richtung, die entlang der Senkrechten zu einem Vorwärtsfahrrichtungsvektor des Fahrzeugs ist und der Links-Rechts-Richtung entspricht.

### Darstellung der Erfindung

Die oben angegebene Aufgabe wird durch ein Sichtsystem für ein Fahrzeug mit den Merkmalen des Anspruchs 1 gelöst.

Das Sichtsystem weist eine am Fahrzeug angebrachte Aufnahmeeinheit mit mindestens einem Aufnahmegerät, eine Berechnungseinheit und eine Wiedergabeeinheit auf, wobei das Aufnahmegerät angepasst ist, einen Aufnahmebereich hinter dem Fahrzeug zu erfassen, der einen im Wesentlichen unverzerrten nach hinten gerichteten Aufnahmebereich hinter dem Fahrzeug und einen im Wesentlichen nach unten gerichteten Aufnahmebereich hinter dem Fahrzeug enthält. Das Sichtsystem ist dabei derart angepasst, aus dem Aufnahmebereich ein erstes Bild zu extrahieren, das dem unverzerrten Aufnahmebereich entspricht, und ein zweites Bild zu extrahieren, das dem nach unten gerichteten Aufnahmebereich entspricht, und auf der Wiedergabeeinheit das erste Bild in einem oberen Bildbereich und das zweite Bild in einem unteren Bildbereich darzustellen. Dabei kann die Darstellung der Bildbereiche getrennt stattfinden oder durch einen Übergang zwischen beiden Darstellungen erfolgen.

Durch das Erfassen eines nach hinten gerichteten Aufnahmebereichs hinter dem Fahrzeug und eines im Wesentlichen nach unten gerichteten Aufnahmebereich hinter dem Fahrzeug und der Wiedergabe dieser extrahierten Bilder des nach hinten gerichteten Aufnahmebereich und des nach unten gerichteten Aufnahmebereich in einer Wiedergabeeinheit, kann der Fahrer auch bei einem Fahrzeug ohne direkte Sichtmöglichkeit durch das Heck, einem dem Fahrer bekannten Rückblick wie durch ein Heckfenster eines Fahrzeuges haben und gleichzeitig den Bereich, der unmittelbar hinter dem Fahrzeug liegt, also den Nahbereich hinter dem Fahrzeug, einsehen. Insgesamt werden dem Fahrer für die Vorwärts- und Rückwärtsfahrt wesentlichen Bereiche hinter dem Fahrzeug dargestellt. Die Darstellung ist insbesondere durch die Darstellung der extrahierten Bereiche für den Fahrer leicht verständlich und es wird ihm dadurch sowohl ermöglicht, die Entfernung und Geschwindigkeit rückwärtiger, ferner liegender Fahrzeuge einzuschätzen, als auch, z.B. bei Einparkmanövern, Entfernungen zu anderen Fahrzeugen oder anderen Hindernissen einzuschätzen.

Der Erfindung liegt somit die Idee zugrunde, durch Aufnahme und Extrahierung von sowohl einem (horizontal) nach hinten gerichteten Aufnahmebereich hinter dem Fahrzeug und einem nach unten gerichteten Aufnahmebereich hinter dem Fahrzeug dem Fahrer eine intuitiv verständliche Darstellung des Bereichs hinter dem Fahrzeug durch die Darstellung der extrahierten Bereiche in einer Wiedergabeeinheit zu ermöglichen. Außerdem werden nur die Bereiche dargestellt, die für die wesentlichen Fahrsituationen wirklich relevant sind, nämlich der Nahbereich unmittelbar hinter dem Fahrzeug für die Rückwärtsfahrt und der nach hinten gerichtete Horizontsichtbereich für die Vorwärtsfahrt. Der Nahbereich erstreckt sich z.B. bis zu maximal 10 m hinter dem Fahrzeug, z.B. bis zu 7 m hinter dem Fahrzeug, während der nach hinten gerichtete Horizontsichtbereich bei einer Entfernung von mehr als 10 m, wie z.B. 15 m, hinter dem Fahrzeug beginnt. Dies bedeutet, dass ein Aussparungsbereich zwischen den beiden darzustellenden Bereichen, der weder für Vorwärtsfahrt noch für Rückwärtsfahrt relevant ist, nicht dargestellt oder durch eine Übergangsdarstellung belegt wird und somit der Fahrer nicht durch unnötige Information verwirrt wird.

Vorteilhafte Ausführungsformen sind in den abhängigen Ansprüchen angegeben.

In einer vorteilhaften Ausgestaltung entspricht der nach hinten gerichtete Aufnahmebereich einer Horizontsicht. Damit entsprechen der Aufnahmebereich und das entsprechend extrahierte und wiedergegebene erste Bild dem Bereich, den ein Fahrer üblicherweise bei Fahrzeugen, bei denen die Sicht durch den Heckbereich des Fahrzeugs nicht versperrt ist, in einem Rückspiegel einsieht.

In einer vorteilhaften Ausgestaltung enthält das Aufnahmegerät, z.B. eine Kamera, eine Linse. Verzerrungen treten in der Regel zunehmend zum jeweiligen Bildrand auf. Dadurch, dass das erste Bild aus dem unverzerrten nach hinten gerichteten Aufnahmebereich extrahiert wird, wird dem Fahrer insbesondere ein unverzerrtes Bild entsprechend der Fernsicht bis zum Horizont wiedergegeben. Dadurch wird das Bild scharf und für den Fahrer wird die Einschätzung von Entfernung und Geschwindigkeit von Fahrzeugen vorteilhaft verbessert.

In einer vorteilhaften Ausgestaltung enthält das Aufnahmegerät eine asphärische Linse. Eine asphärische Linse ist eine Linse, deren optisch wirksame Form von der Kugelform abweicht, so dass durch die höhere Zahl an Parametern Abbildungsfehler vermieden werden können. Speziell kann man die sphärische Aberration korrigieren, also Verzerrungen, die insbesondere zum Bildrand hin zunehmen. Wenn gemäß Anspruch 1 das Aufnahmegerät einen im Wesentlichen unverzerrten nach hinten gerichteten Aufnahmebereich erfasst, ergeben sich sphärische Aberrationen unter anderem im nach unten gerichteten Aufnahmebereich. Durch Einsatz der asphärischen Linse wird weitgehend ein verzerrungsfreies Bild, insbesondere im nach unten gerichteten Bereich, erfasst und wiedergegeben, so dass z.B. die Entfernung zu anderen Fahrzeugen, z.B. bei Einparkmanövern, korrekt einschätzbar ist.

In vorteilhaften Ausgestaltungen ist das Aufnahmegerät eine Kamera, möglicherweise mit Weitwinkeleinrichtung, oder ein anderweitiger Bildsensor, der vorzugsweise dauerhaft, d.h. zumindest bei angeschalteter Zündung des Fahrzeugs, und ununterbrochen Bilder erfasst und an die Berechnungseinheit im Fahrzeug liefert, welche dann wiederum die erhaltenen Daten umwandelt, um das erste Bild im oberen Bildbereich und das zweite Bild in einem unteren Bildbereich der Wiedergabeeinheit sowie ggf. einen Übergang anzuzeigen. Die Darstellung auf der Wiedergabeeinheit ist vorzugsweise ebenfalls dauerhaft und in Echtzeit.

In einer vorteilhaften Ausgestaltung entspricht der nach hinten gerichtete Bereich im Wesentlichen der Abbildung auf einem Innenspiegel. Dadurch erhält der Fahrer vorteilhafterweise einen ihm vertrauten und damit unmittelbar intuitiv verständlichen Blick auf dem hinter dem Fahrzeug liegenden Horizontbereich.

In einer vorteilhaften Ausgestaltung ist die Wiedergabeeinheit, z.B. ein Display oder eine Projektionseinrichtung, im Bereich eines herkömmlichen Innenspiegels im Fahrzeug angeordnet. Diese Position entspricht der für die meisten Fahrer gewohnten Position eines Innenspiegels in dem Fahrzeug, d.h. die Wiedergabeeinheit ist im Fahrzeug derart angeordnet, dass sie unter Berücksichtigung verschiedener Sitzpositionen des Fahrers auf Höhe der Frankfurter Horizontalen (Deutsche Horizontale) oder darüber für das 95. Perzentil bezüglich der Augenhöhe im Sitzen einer Person auf dem Fahrzeug liegt. Die Frankfurter Horizontale ist diejenige gedachte Linie, die den höchsten Punkt des menschlichen Ohrs mit dem niedrigsten Punkt des Augensockels verbindet.

Nach einer bevorzugten Ausgestaltung extrahiert die Berechnungseinheit das erste und das zweite Bild aus der Erfassung des Aufnahmegeräts. Dadurch wird kein weiteres zusätzliches Gerät und damit kein weiterer Platzbedarf innerhalb des Fahrzeuges benötigt. Die Berechnungseinheit kann als separate Einheit ausgebildet sein, durch einen Bordcomputer realisiert sein, oder in der Wiedergabeeinheit oder der Aufnahmeeinheit integriert sein.

Nach einer bevorzugten Ausgestaltung ist das Sichtsystem angepasst, die Größe der Darstellung des oberen und unteren Bildbereichs auf der Wiedergabeeinheit dynamisch abhängig von der Fahrsituation anzupassen. Die dynamische Anpassung kann hierbei sowohl abhängig von der Fahrgeschwindigkeit als auch abhängig von der Fahrtrichtung, also Vorwärtsfahrt oder Rückwärtsfahrt, angepasst werden. Somit ist es zum Beispiel bei einer Vorwärtsfahrt und/oder bei hoher Fahrgeschwindigkeit möglich, den oberen Bildbereich, der den im Wesentlichen nach hinten gerichteten Aufnahmebereich wiedergibt (Horizontblick), größer als den unteren Bildbereich, der den nach unten gerichteten Aufnahmebereich wiedergibt und der bei Vorwärtsfahrt und insbesondere bei hohen Fahrgeschwindigkeiten für das Lenken des Fahrzeugs von geringer Bedeutung ist, darzustellen. Umgekehrt kann bei der Rückwärtsfahrt, zum Beispiel beim Einparken des Fahrzeugs oder beim rückwärtigen Annähern eines LKWs oder Kleintransporters an eine Laderampe, der zweite Bereich (also der nach unten gerichtete Bereich) in der Wiedergabeeinheit größer dargestellt werden als der erste Bereich, d.h. der horizontal nach hinten gerichtete Aufnahmebereich.

Nach einer bevorzugten Ausgestaltung ist der nach unten gerichtete Aufnahmebereich stärker verzerrt als der nach hinten gerichtete Aufnahmebereich. Hiermit wird vorteilhafterweise erreicht, dass dem Fahrer ein genaues, scharfes und im Wesentlichen unverzerrtes Bild des nach hinten gerichteten Aufnahmebereich (Horizontblick) dargestellt wird, da dieses Bild unabdingbar zur korrekten Einschätzung von Entfernung und Geschwindigkeit rückwärtiger Fahrzeuge und zum Erkennen verhältnismäßig kleiner Objekte in der Ferne ist. Im Nahbereich hingegen kann ein verzerrtes Bild vorliegen, da in Fahrsituationen, in denen der Nahbereich maßgebend ist (z.B. Einparken), zum einem die Fahrgeschwindigkeit gering ist, zum anderen Verzerrungen leichter vom Fahrer erkannt und interpretiert werden können und die Objekte auf Grund der Nähe ohnehin größer sind. Erfindungsgemäss wird bei dem Sichtsystem die Größe des ersten und zweiten extrahierten Bereichs abhängig von der Fahrtrichtung und/oder Fahrtgeschwindigkeit angepasst. Hier kann beispielsweise beim Einparken des Fahrzeugs oder beim rückwärtigen Annähern eines LKWs oder Kleintransporters an eine Laderampe, der zweite Bereich (also der nach unten gerichtete Bereich) größer extrahiert werden als bei einer Vorwärtsfahrt des Fahrzeuges. Die Größe anpassen bedeutet, dass der dargestellte Bereich größer oder kleiner gemacht wird, also einen Sichtkegel mit größerem oder kleineren Öffnungswinkel darstellt. Nach einer bevorzugten Ausgestaltung sind das erste Bild und das zweite Bild nicht ineinander übergehende Teilbereiche des Aufnahmebereichs. Dadurch wird dem Fahrer ein Übergangsaufnahmebereich, der zwischen dem nach hinten gerichteten Aufnahmebereich und dem nach unten gerichteten Aufnahmebereich liegt und Information enthält, die für das Führen des Fahrzeuges nicht relevant ist, nicht dargestellt. Eine Wiedergabe an überflüssiger Information an den Fahrer wird damit vermieden.

Nach einer bevorzugten Ausgestaltung werden bei der Wiedergabeeinheit das erste Bild in dem oberen Bildbereich und das zweite Bild in dem unteren Bildbereich getrennt von einander darstellt. Dies vereinfacht die Verständlichkeit der für den Fahrer angezeigten Informationen. Die getrennte Darstellung des ersten und zweiten Bildes bedeutet, dass bei einer Darstellung mit nahtlosem Übergang der Bilder in der Wiedergabeeinheit die verschiedenen abgebildeten Aufnahme- bzw. Bildbereiche automatisch erzeugt und erkennbar sind, da das dargestellte Bild in diesem Bereich nicht kontinuierlich ist. Vielmehr liegen zwei Bilder mit nicht ineinander übergehenden Rändern direkt nebeneinander, so dass die zwei Bilder als getrennte Bilder erkennbar sind. Zur besseren Verständlichkeit kann eine Trennmarkierung, wie z.B. ein Balken oder ein Strich zwischen den Bildern vorhanden sein. Eine Strichtrennung zur getrennten Darstellung kann auch in dem Fall eingesetzt werden, wenn der nach hinten gerichtete Aufnahmebereich und der nach unten gerichteten Aufnahmebereich nahtlos ineinander übergehen. Bei nicht nahtlosem Übergang der Aufnahmebereiche kann ein Übergangsaufnahmebereich durch z.B. einen schwarzen Bildbereich in der Wiedergabeeinheit eine Trennung des ersten und zweiten Bildes erzeugen.

Nach einer bevorzugten Ausgestaltung werden bei der Wiedergabeeinheit das erste Bild in dem oberen Bildbereich, das zweite Bild in dem unteren Bildbereich und ein drittes Bild in einem mittleren Bildbereich dargestellt, wobei das dritte Bild dem Übergangsaufnahmebereich entspricht, der zwischen dem nach hinten gerichteten Aufnahmebereich und dem nach unten gerichteten Aufnahmebereich und jeweils angrenzend an diese liegt. Damit erhält der Fahrer einen umfassenden Einblick über den gesamten hinter dem Fahrzeug liegenden Bereich.

Nach einer bevorzugten Ausgestaltung grenzt der nach hinten gerichtete Aufnahmebereich direkt an den nach unten gerichteten Aufnahmebereich an, d.h. ein Aufnahmebereichswinkel γ des Übergangsaufnahmebereichs entsprich 0°. Hierbei wird auf die Darstellung des mittleren Bildbereichs und somit auf das dritte Bild verzichtet, wodurch die Interpretation des gesamten Bildbereichs für den Fahrer vereinfacht wird.

Nach einer bevorzugten Ausgestaltung enthält der nach unten gerichtete Aufnahmebereich einen Fahrzeugbezug, bevorzugt eine Fahrzeugheckkante. Dadurch wird insbesondere die Abschätzung von Entfernungen vom Fahrzeug zu Hindernissen bei Rückwärtsfahrten erleichtert. Alternativ kann eine Fahrzeugheckkante auch als virtuelles Bild in das zweite Bild, das den nach unten gerichteten Aufnahmebereich darstellt, eingeblendet werden.

### Kurze Beschreibung der Figuren

Nachfolgend wird die Erfindung rein beispielhaft anhand der beigefügten Figuren beschrieben, in denen
- Fig. 1: ein Fahrzeug mit einem Sichtsystem in einer Ausführungsform der Erfindung zeigt;
- Fig.2: eine schematische Ansicht des erfindungsgemäßen Sichtsystems ist; und
- Fig. 3: eine schematische Ansicht einer Wiedergabeeinheit des Sichtsystems ist.

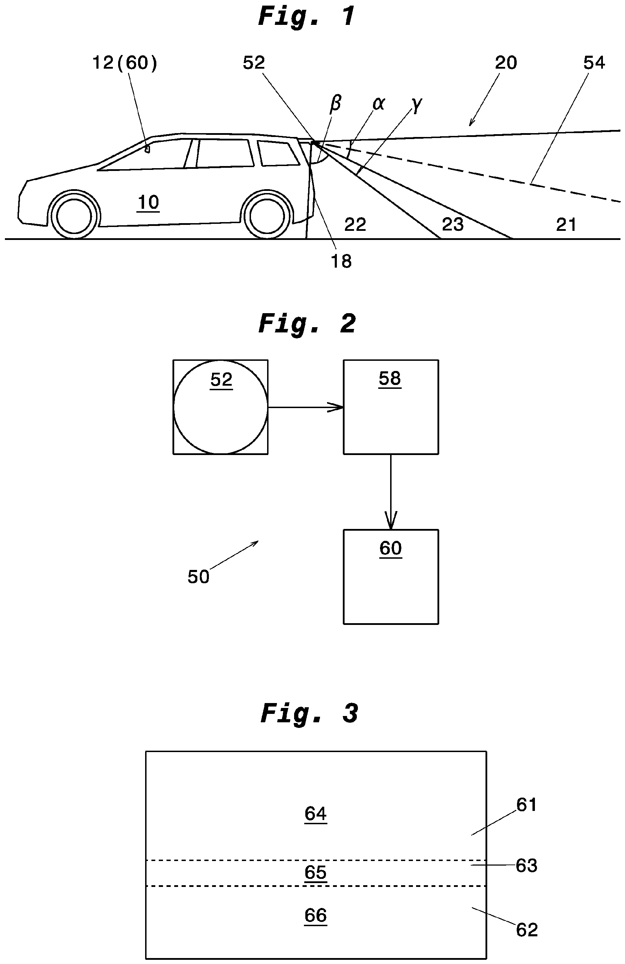

Fig. 1 zeigt ein Fahrzeug 10 mit einem erfindungsgemäßen Sichtsystem 50 zur Sicht in den hinter dem Fahrzeug 10 liegenden Bereich 20. Außer für das dargestellte Fahrzeug 10 kann das erfindungsgemäße Sichtsystem 50 auch besonders vorteilhaft bei Nutzfahrzeugen, bei denen gewöhnlicherweise keine Möglichkeit zu einer direkten Sicht aus der Fahrerkabine in den hinter dem Fahrzeug liegenden Bereich 20 besteht, angewendet werden.

Das Sichtsystem 50 enthält eine Aufnahmeeinheit mit einem einzigen Aufnahmegerät 52, wie z.B. einer Kamera oder einem Bildsensor, zum Erfassen und Aufnehmen des Bereiches 20, der sich hinter dem Fahrzeug befindet. Dieser Bereich 20 umfasst einen im Wesentlichen nach hinten gerichteten Aufnahmebereich 21, einen im Wesentlichen nach unten gerichteten Aufnahmebereich 22, und einen Übergangsaufnahmebereich 23, der zwischen dem nach hinten gerichteten Aufnahmebereich 21 und dem nach unten gerichteten Aufnahmebereich 22 und jeweils angrenzend an diese liegt. Der nach hinten gerichtete Aufnahmebereich 21 hat Horizontsicht und der nach unten gerichtete Aufnahmebereich 22 kann als Nahsicht angesehen werden und zeigt bei vorteilhafter Ausführung eine Stoßstange des Fahrzeugs.

Wie in Fig. 1 gezeigt, ist das Aufnahmegerät 52 dazu angepasst, die drei unterschiedlichen Aufnahmebereiche 21, 22 und 23 zu erfassen, was beispielsweise durch eine Weitwinkelkamera möglich ist. Beispielsweise kann ein Kameraöffnungswinkel bezogen auf die Vertikale einer solchen Aufnahmeeinheit in einem Bereich von 70° bis 120° liegen, abhängig davon, wie die Anordnung der Kamera bzw. des Aufnahmegeräts 52 am Fahrzeug ist. Ferner kann ein Kameraöffnungswinkel bezogen auf die Horizontale eines solchen Aufnahmegeräts in einem Bereich von 70° bis 160° liegen. Bezogen auf die Vertikale liegt der Aufnahmebereichswinkel (Öffnungswinkel) α des Aufnahmebereich 21 in einem Bereich von 15° bis 60° und der Aufnahmebereichswinkel β des Aufnahmebereichs 22 in einem Bereich von 30° bis 90°. Der Aufnahmebereichswinkel γ des Übergangsaufnahmebereichs 23 liegt in einem Bereich von 0° bis 60°, d.h. bei einem Aufnahmebereichswinkel γ von 0° gehen der Aufnahmebereich 21 und Aufnahmebereich 22 nahtlos ineinander über. Abhängig von den jeweiligen Aufnahmebereichswinkeln kann der Aufnahmebereich 22 bezogen auf den Fahrweg in Fahrtrichtung eine Strecke zwischen 2 und 10 Meter erfassen, wobei der bevorzugte Bereich zwischen 2 bis 5 Metern liegt, und der Aufnahmebereich 21 bezogen auf den Fahrweg in Fahrtrichtung eine Strecke erfassen, die etwa 10 Meter und mehr hinter dem Fahrzeug beginnt. Ferner kann der Aufnahmebereichswinkel β des Aufnahmebereich 22 so gewählt werden, dass er einen Fahrzeugbezug enthält, beispielsweise eine Fahrzeugheckkante 18 des Fahrzeuges 10.

Das Sichtsystem 50 umfasst weiter eine Bildverarbeitungseinheit 58, in die die Daten der Aufnahmeeinheit eingegeben werden. Die Bildverarbeitungseinheit 58 bzw. Berechnungseinheit verarbeitet das durch das Aufnahmegerät 52 erzeugte Bild, das den nach hinten gerichteten Aufnahmebereich 21, den nach unten gerichteten Aufnahmebereich 22 und den Aussparungsbereich 23 enthält.

Die Verarbeitung der Berechnungseinheit 58 ist derart, dass drei Bilder 61, 62, 63 erzeugt werden, die in einer Wiedergabeeinheit 60, die Teil des Sichtsystems 50 ist, anzeigbar sind. Auf der Wiedergabeeinheit 60 gibt es einen oberen Bildbereich 64, einen mittleren Bildbereich 65 und einen unteren Bildbereich 66. Dabei wird in dem oberen Bildbereich 64 das erste Bild 61 wiedergegeben, das dem nach hinten gerichteten Aufnahmebereich (Horizontsicht) 21 entspricht. Im mittleren Bildbereich 65 wird das dritte Bild 63 wiedergegeben, das dem Übergangsaufnahmebereich 23 entspricht. Im unteren Bildbereich 66 wird das zweite Bild 62 entsprechend dem nach unten gerichteten Aufnahmebereich (Nahsicht) 22, angezeigt. Durch die nahtlose Anzeige der drei Bilder 61, 63, 62 in den jeweiligen Bildbereichen 64, 65, 66 wird dem Fahrer der gesamte erfasste Aufnahmebereich wiedergegeben.

Alternativ können die Bildbereiche 64, 66 auch getrennt voneinander wiedergegeben, d.h. der mittlere Bildbereich 65 bzw. das dritte Bild 63 wird nicht dargestellt. Hierbei kann entweder der Aufnahmebereichswinkel γ des Übergangsaufnahmebereichs 23 so gewählt sein, dass dieser bei 0° liegt. Hierbei geht der Aufnahmebereich 21 nahtlos in den Aufnahmebereich 22 über, d.h. ein Übergangsaufnahmebereich 23 ist grundsätzlich nicht existent. Oder es wird auf eine Darstellung eines existenten Übergangsaufnahmebereichs 23 und somit des dritten Bildes 63 bzw. des mittleren Bildbereiches 65, der für Fahrsituationen nicht relevant ist, verzichtet, so dass eine Wiedergabe an überflüssiger Information an den Fahrer vermieden wird. Bei einem existenten Übergangsaufnahmebereich 23 beruht daher die Trennung der Bildbereiche 64, 66 bzw. des ersten und zweiten Bildes 61, 62 entweder auf den jeweiligen unterschiedlichen Abbildungen der Bilder an sich, die zusätzlich noch durch z.B. einen schwarzen Strich getrennt werden können, oder auf dem Schwärzen des mittleren Bildbereiches 65.

Die Berechnungseinheit 58 kann an jeder Stelle innerhalb des Fahrzeuges angeordnet sein. Sie kann z.B. integral mit der Aufnahmeeinheit oder mit der Wiedergabeeinheit 60 ausgebildet sein.

Die Darstellungsfläche Wiedergabeeinheit 60 ist in dem Fahrzeug, wie in Fig. 1 gezeigt, vorzugsweise in der Art eines konventionellen Rückspiegels derart angebracht, dass sie das 95. Perzentil auf Höhe der Frankfurter Horizontalen (Deutsche Horizontale, d.h. diejenige imaginäre Linie, die den niedrigsten Punkt des Augensockels mit dem höchsten Punkt des Ohrs verbindet) oder darüber liegt. Dies führt dazu, dass der Fahrer ergonomische Gegebenheiten insofern vorfindet, als er sich an einer gewöhnlichen Position für einen Innenspiegel 12 in einem PKW orientieren kann und dort das gleiche Bild sieht, das er bei einem Zurückblicken mit Hilfe des Innenspiegels des PKWs sehen würde.

Der Bildschirm oder das Display bzw. die Projektionsfläche oder Ähnliches der Wiedergabeeinheit 60 ist vorzugsweise in der Fahrzeugkabine bzw. im Fahrzeug 10 um einen Drehpunkt verstellbar angeordnet, so dass der Fahrer sich eine gut einsehbare Position für seinen persönlichen Augpunkt feineinstellen kann.

Die Wiedergabeeinheit 60 kann ein Monitor mit entsprechendem Bildschirm oder Display sein. Allerdings ist die Wiedergabeeinheit 60 nicht darauf beschränkt und kann ebenso eine Projektion auf innenseitige Fahrzeugkarosserieteile sein.

Das Aufnahmegerät 52 (Kamera 52) ist an einem hinteren Fahrzeugbereich, vorzugsweise an der Oberkante, wie in Fig. 1 dargestellt, angebracht und im Wesentlichen horizontal nach hinten ausgerichtet.

Das Aufnahmegerät 52 (Kamera 52) weist eine optische Linse auf, deren optische Achse 54 im Wesentlichen mittig in dem nach hinten gerichteten Aufnahmebereich 21 liegt und damit mit der Winkelhalbierenden des in Fig. 1 gezeigten Aufnahmebereichswinkel α/2 zusammenfällt. Allgemein treten bei Weitwinkelobjektiven mit großem Bildwinkel an Randbereichen des erfassten Bildwinkels sphärische Aberration auf. Hier könnten bei Verwendung einer "normalen" sprich sphärischen Linse Verzerrungen im Horizontsichtbereich entstehen, so dass es für den Fahrer erschwert sein könnte, in der Ferne befindliche Objekte zu erkennen. Dadurch, dass die optische Achse im Wesentlichen mittig in dem nach hinten gerichteten Aufnahmebereich 21 liegt, ist dieser Bereich im Wesentlichen nicht verzerrt darstellbar, so dass die korrekte Einschätzung von Entfernung und Geschwindigkeit rückwärtiger Fahrzeuge möglich ist und auch entfernte Objekte gut erkennbar sind.

Alternativ enthält das Aufnahmegerät bzw. die Kamera 52 eine asphärische Linse. Eine asphärische Linse ist eine Linse, deren optisch wirksame Form von der Kugelform abweicht. Speziell kann durch eine asphärische Linse die oben genannte sphärische Aberration korrigiert werden, die vor allem an Randbereichen, im vorliegenden Fall der nach unten gerichtete Aufnahmebereich 22, des erfassten Bildwinkels auftritt. Durch den Einsatz der asphärischen Linse werden diese Verzerrungen entzerrt und dem Fahrer kann ein hinsichtlich möglicher Irritationen verbessertes intuitiv verständliches Bild des nach unten gerichteten Aufnahmebereichs 22 (Bereich des toten Winkels) vermittelt werden.

Der nach hinten gerichtete Aufnahmebereich 21 entspricht im Wesentlichen der Abbildung auf einem Innenspiegel. Da dieser nach hinten gerichtete Aufnahmebereich 21 im oberen Bildbereich 64 der Wiedergabeeinheit 60 angezeigt wird, erleichtert dies dem Fahrer, das dargestellte Bild leichter zu verstehen.

In der Ausführungsform passt das Sichtsystem 50 die jeweilige Größe bzw. den dargestellten Bereich des in dem oberen Bildbereich 64 und unteren Bildbereich 66 jeweils angezeigten Bildes 61, 62 auf der Wiedergabeeinheit 60 dynamisch an die jeweilige Fahrsituation an. Die dynamische Anpassung erfolgt hierbei sowohl abhängig von der Fahrgeschwindigkeit als auch abhängig von der Fahrtrichtung, also Vorwärtsfahrt oder Rückwärtsfahrt. Somit ist bei einer Vorwärtsfahrt und bei hoher Fahrgeschwindigkeit der im ersten Bild 61 abgebildete Ausschnitt aus dem Aufnahmebereich kleiner als im Vergleich zu einer Vorwärtsfahrt und geringerer Fahrgeschwindigkeit, da bei schneller Fahrt das hauptsächlich interessante Gebiet mehr im Horizontbereich liegt. Bei Rückwärtsfahrt, zum Beispiel beim Einparken des Fahrzeugs 10 oder beim rückwärtigen Annähern eines LKWs oder Kleintransporters an eine Laderampe, ist hingegen der im zweiten Bild 62 abgebildete Ausschnitt aus dem Aufnahmebereich größer als im Vergleich zu einer Vorwärtsfahrt. Hierbei können die Öffnungswinkel α, β so gewählt sein, dass die Aufnahmebereiche 21, 22 nahtlos ineinander übergehen (d.h. ein Übergangsaufnahmebereich 23 ist nicht existent). Das bedeutet, dass die Öffnungswinkel α, β der jeweiligen Aufnahmebereiche 21, 22 für die dargestellten Bilder 61, 62 variieren und der Aufnahmebereichswinkel γ des Übergangsaufnahmebereichs 23 ebenfalls variiert wird. Bei einem Aufnahmebereichswinkel γ = 0 kann es vorteilhaft sein, dass zwischen den Bilder 61, 62 eine Trennung angeordnet wird, wie sie bereits oben beschrieben wurde.

Zusätzlich kann optische Achse 54 im Wesentlichen mittig in dem nach unten gerichteten Aufnahmebereich 22 gelegt werden, so dass diese mit der Winkelhalbierenden des in Fig. 1 gezeigten Aufnahmebereichswinkel β/2 zusammenfällt, um dadurch eine entzerrte Abbildung des Aufnahmebereichs 22 zu erhalten, z.B. durch Schwenken des Aufnahmegeräts 52.

Alternativ oder zusätzlich werden auch die Größen des oberen Bildbereiches 64 und unteren Bildbereiches 66 entsprechend variiert, also z.B. bei Vorwärtsfahrt nimmt der obere Bildbereich 64 auf der Wiedergabeeinheit 60 verhältnismäßig mehr Raum ein als bei Rückwärtsfahrt und/oder als der untere Bildbereich 66. Bei Rückwärtsfahrt nimmt entsprechend der untere Bildbereich 66 verhältnismäßig mehr Raum ein als bei Vorwärtsfahrt und/oder als der obere Bildbereich 66. Entsprechend kann auch der mittlere Bildbereich 65, sofern dieser angezeigt wird (abhängig davon ob ein vorhandener Übergangsaufnahmebereich 23 dargestellt wird), variiert werden.

Das Sichtsystem passt somit die Größe des ersten und zweiten extrahierten Bereichs abhängig von der Fahrtrichtung und/oder Fahrtgeschwindigkeit an. D.h. das Sichtsystem kann den Aufnahmebereichswinkel α des Aufnahmebereichs 21, den Aufnahmebereichswinkel β des Aufnahmebereichs 22 und den Aufnahmebereichswinkel γ des Übergangsaufnahmebereichs 23 entsprechend korrespondierend zueinander wählen.

### Bezugszeichenliste

- 10: Fahrzeug
- 12: Innenspiegel
- 18: Fahrzeugheckkante
- 20: Hinter dem Fahrzeug liegender Bereich
- 21: Nach hinten gerichteter Aufnahmebereich (Horizontsicht)
- 22: Nach unten gerichteter Aufnahmebereich (Nahsicht)
- 23: Übergangsaufnahmebereich
- 50: Sichtsystem
- 52: Aufnahmegerät
- 54: Optische Achse
- 58: Berechnungseinheit
- 60: Wiedergabeeinheit
- 61: Erstes Bild
- 62: Zweites Bild
- 63: Drittes Bild
- 64: Oberer Bildbereich
- 65: Mittlerer Bildbereich
- 66: Unterer Bildbereich
- α: Öffnungswinkel (der Horizontsicht)
- β: Öffnungswinkel (der Nahsicht)
- γ: Öffnungswinkel (des Übergangsaufnahmebereichs)

## Patentansprüche

1. Sichtsystem (50) für ein Fahrzeug, mit
einer am Fahrzeug (10) angebrachten Aufnahmeeinheit mit mindestens einem Aufnahmegerät (52),
einer Berechnungseinheit (58), und
einer Wiedergabeeinheit (60),
wobei das Aufnahmegerät (52) angepasst ist, einen Aufnahmebereich (21, 22, 23) hinter dem Fahrzeug (10) zu erfassen, der zumindest einen unverzerrten nach hinten gerichteten Aufnahmebereich (21) hinter dem Fahrzeug und einen nach unten gerichteten Aufnahmebereich (22) hinter dem Fahrzeug enthält,
wobei das Sichtsystem (50) angepasst ist, aus dem Aufnahmebereich (21, 22, 23) ein erstes Bild (61) zu extrahieren, das dem unverzerrten Aufnahmebereich (21) entspricht, und ein zweites Bild (63) zu extrahieren, das dem nach unten gerichteten Aufnahmebereich (22) entspricht, und auf der Wiedergabeeinheit (60) das erste Bild (61) in einem oberen Bildbereich (64) und das zweite Bild (62) in einem unteren Bildbereich (66) darzustellen, und
wobei das Sichtsystem (50) die Größe des ersten und zweiten extrahierten Bilds (61, 62) abhängig von der Fahrtrichtung und/oder Fahrtgeschwindigkeit anpasst.

2. Sichtsystem (50) nach Anspruch 1, bei dem der unverzerrte nach hinten gerichtete Aufnahmebereich (21) einer Horizontsicht entspricht.

3. Sichtsystem (50) nach Anspruch 1 oder 2, bei dem das Aufnahmegerät (52) eine Linse enthält und/oder bei dem das Aufnahmegerät (52) eine asphärische Linse enthält.

4. Sichtsystem (50) nach einem der vorhergehenden Ansprüche, bei dem das Aufnahmegerät (52) eine einzige Kamera (52) ist.

5. Sichtsystem (50) nach einem der vorhergehenden Ansprüche, bei dem der unverzerrte nach hinten gerichtete Aufnahmebereich (21) der Abbildung auf einem Fahrzeuginnenspiegel (12) entspricht, und/oder bei dem die Wiedergabeeinheit (60) im Bereich eines herkömmlichen Innenspiegels (12) im Fahrzeug (10) angeordnet ist.

6. Sichtsystem (50) nach einem der vorhergehenden Ansprüche, bei dem die Berechnungseinheit (58) das erste und das zweite Bild (61, 62) aus dem Aufnahmebereich (21, 22, 23) extrahiert.

7. Sichtsystem (50) nach einem der vorhergehenden Ansprüche, bei dem das Sichtsystem (50) die Größe der Darstellung des oberen und unteren Bildbereichs (64, 66) auf der Wiedergabeeinheit (60) abhängig von der Fahrsituation dynamisch anpasst.

8. Sichtsystem (50) nach einem der vorhergehenden Ansprüche, bei dem bei Rückwärtsfahrt der untere Bildbereich (66) größer als bei Vorwärtsfahrt des Fahrzeugs ist und bei Vorwärtsfahrt der obere Bildbereich (64) entsprechend größer als bei Rückwärtsfahrt ist.

9. Sichtsystem (50) nach einem der vorhergehenden Ansprüche, bei dem der nach unten gerichtete Aufnahmebereich (22) stärker verzerrt ist als der nach hinten gerichtete Aufnahmebereich (21).

10. Sichtsystem (50) nach einem der vorhergehenden Ansprüche, bei dem das erste Bild (61) und das zweite Bild (62) nicht ineinander übergehende Teilbereiche des Aufnahmebereichs (21, 22, 23) sind.

11. Sichtsystem (50) nach einem der vorhergehenden Ansprüche, bei dem die Wiedergabeeinheit (60) das erste Bild (61) in dem oberen Bildbereich (64) und das zweite Bild (62) in dem unteren Bildbereich (66) getrennt von einander darstellt.

12. Sichtsystem (50) nach einem der Ansprüche 1 bis 10, bei dem die Wiedergabeeinheit (60) das erste Bild (61) in dem oberen Bildbereich (64), das zweite Bild (62) in dem unteren Bildbereich (66) und ein drittes Bild (63) in einem mittleren Bildbereich (65) darstellt, wobei das dritte Bild (63) einem Übergangsaufnahmebereich (23) entspricht, der zwischen dem nach hinten gerichteten Aufnahmebereich (21) und dem nach unten gerichteten Aufnahmebereich (22) und jeweils angrenzend an diese liegt.

13. Sichtsystem (50) nach einem der Ansprüche 1 bis 12, bei dem der nach hinten gerichtete Aufnahmebereich (21) direkt an den nach unten gerichteten Aufnahmebereich (22) angrenzt.

14. Sichtsystem (50) nach einem der vorhergehenden Ansprüche, bei dem der nach unten gerichtete Aufnahmebereich (22) einen Fahrzeugbezug, bevorzugt eine Fahrzeugheckkante (18) oder Stoßstange, enthält.

## Claims

1. A visual system (50) for a vehicle, comprising
a capturing unit mounted to the vehicle (10) and provided with at least one capturing device (52),
a calculation unit (58), and
a display unit (60),
wherein the capturing device (52) is adapted to acquire a capturing region (21, 22, 23) behind the vehicle (10), said region including at least one undistorted capturing portion (21) behind the vehicle, which portion is directed backward, and one capturing portion (22) behind the vehicle, which portion is directed downward,
wherein the visual system (50) is adapted to extract a first image (61) from the first capturing portion (21, 22, 23), which image corresponds to the undistorted capturing portion (21), and a second image (62), which corresponds to the capturing portion (22) that is directed downward, and to display the first image (61) in an upper image portion (64) and the second image (62) in a lower portion (66) on the display unit (60), and
wherein the visual system (50) adapts the size of the first and second extracted images (61, 62) dependent of the driving direction and/or the driving speed.

2. The visual system (50) according to claim 1, wherein the undistorted capturing portion (21), which is directed backward, corresponds to a horizontal view.

3. The visual system (50) according to claim 1 or 2, wherein the capturing device comprises a lens, and/or wherein the capturing device (52) comprises an aspherical lens.

4. The visual system (50) according to one of the preceding claims, wherein the capturing device (52) is a single camera (52).

5. The visual system (50) according to one of the preceding claims, wherein the undistorted portion (21), which is directed backward, corresponds to the image on an inside rear view mirror (12) of the vehicle, and/or wherein the display unit (60) is arranged inside the vehicle (10) in the area of a conventional inside rear view mirror (12).

6. The visual system (50) according to one of the preceding claims, wherein the calculation unit (58) extracts the first and second images (61, 62) from the capturing portion (21, 22, 23).

7. The visual system (50) according to one of the preceding claims, wherein the visual system (50) dynamically adapts the size of the displayed upper and lower image portions (64, 66) on the display unit (60) dependent on the driving situation.

8. The visual system (50) according to one of the preceding claims, wherein, when the vehicle is driving in reverse direction, the lower image portion (66) is larger than in a case when the vehicle is driving in forward direction and, when the vehicle is driving in a forward direction, the upper image portion (64) is correspondingly larger than it is in a case when the vehicle is driving in reverse direction.

9. The visual system (50) according to one of the preceding claims, wherein the capturing portion (22) that is directed downward shows a stronger distortion than the capturing portion (21) that is directed backward.

10. The visual system (50) according to one of the preceding claims, wherein the first image (61) and the second image (62) are sub-portions of the capturing portion (21, 22, 23), which sub-portions do not merge.

11. The visual system (50) according to one of the preceding claims, wherein the display unit (60) displays the first image (61) in the upper image portion (64) and the second image (62) in the lower image portion (66), separate from each other.

12. The visual system (50) according to one of claims 1 to 10, wherein the display unit (60) displays the first image (61) in the upper image portion (64), the second image (62) in the lower image portion (66), and a third image (63) in a central image portion (65), wherein the third image (63) corresponds to a transitional capturing portion (23) that is located between and adjacent to the backward-directed capturing portion (21) and the downward-directed capturing portion (22).

13. The visual system (50) according to one of claims 1 to 12, wherein the backward-directed capturing portion (21) is directly adjacent to the downward-directed capturing portion (22).

14. The visual system (50) according to one of the preceding claims, wherein the downward-directed capturing portion (22) contains a relation to the vehicle, preferably a rear edge (18) of the vehicle or a bumper.

## Revendications

1. Système de vision (50) pour un véhicule, avec
une unité d'enregistrement montée sur le véhicule (10) avec au moins un appareil d'enregistrement (52),
une unité de calcul (58), et
une unité de reproduction (60),
dans lequel l'appareil d'enregistrement (52) est adapté pour détecter une zone d'enregistrement (21, 22, 23) derrière le véhicule (10), qui contient au moins une zone d'enregistrement derrière le véhicule non déformée (21) dirigée vers l'arrière et une zone d'enregistrement derrière le véhicule dirigée vers le bas (22),
dans lequel le système de vision (50) est adapté pour extraire de la zone d'enregistrement (21, 22, 23) une première image (61), qui correspond à la zone d'enregistrement non déformée (21), et pour extraire une deuxième image (63), qui correspond à la zone d'enregistrement dirigée vers le bas (22), et pour représenter sur l'unité de reproduction (60) la première image (61) dans une zone d'image supérieure (64) et la deuxième image (62) dans une zone d'image inférieure (66), et
dans lequel le système de vision (50) adapte la taille de la première et deuxième image extraite (61, 62) en fonction de la direction de déplacement et/ou de la vitesse de déplacement.

2. Système de vision (50) selon la revendication 1, dans lequel la zone d'enregistrement dirigée vers l'arrière non déformée (21) correspond à une vue horizontale.

3. Système de vision (50) selon la revendication 1 ou 2, dans lequel l'appareil d'enregistrement (52) contient une lentille et/ou dans lequel l'appareil d'enregistrement (52) contient une lentille asphérique.

4. Système de vision (50) selon l'une quelconque des revendications précédentes, dans lequel l'appareil d'enregistrement (52) est une caméra unique (52).

5. Système de vision (50) selon l'une quelconque des revendications précédentes, dans lequel la zone d'enregistrement non déformée dirigée vers l'arrière (21) correspond à la représentation sur un rétroviseur intérieur de véhicule (12), et/ou dans lequel l'unité de reproduction (60) est agencée dans la zone d'un rétroviseur intérieur habituel (12) dans le véhicule (10).

6. Système de vision (50) selon l'une quelconque des revendications précédentes, dans lequel l'unité de calcul (58) extrait la première et la deuxième image (61, 62) de la zone d'enregistrement (21, 22, 23).

7. Système de vision (50) selon l'une quelconque des revendications précédentes, dans lequel le système de vision (50) adapte dynamiquement la taille de la représentation de la zone d'image supérieure et inférieure (64, 66) sur l'unité de reproduction (60) en fonction de la situation de conduite.

8. Système de vision (50) selon l'une quelconque des revendications précédentes, dans lequel lors de la marche arrière, la zone d'image inférieure (66) est plus grande que lors de la marche avant du véhicule et lors de la marche avant, la zone d'image supérieure (64) est d'autant plus grande que lors de la marche arrière.

9. Système de vision (50) selon l'une quelconque des revendications précédentes, dans lequel la zone d'enregistrement dirigée vers le bas (22) est davantage déformée que la zone d'enregistrement dirigée vers l'arrière (21).

10. Système de vision (50) selon l'une quelconque des revendications précédentes, dans lequel la première image (61) et la deuxième image (62) sont des zones partielles sans transition de la zone d'enregistrement (21, 22, 23).

11. Système de vision (50) selon l'une quelconque des revendications précédentes, dans lequel l'unité de reproduction (60) représente séparément l'une de l'autre la première image (61) dans la zone d'image supérieure (64) et la deuxième image (62) dans la zone d'image inférieure (66).

12. Système de vision (50) selon l'une quelconque des revendications 1 à 10, dans lequel l'unité de reproduction (60) représente la première image (61) dans la zone d'image supérieure (64), la deuxième image (62) dans la zone d'image inférieure (66) et une troisième image (63) dans une zone d'image médiane (65), dans lequel la troisième image (63) correspond à une zone d'enregistrement de transition (23) qui se trouve entre la zone d'enregistrement dirigée vers l'arrière (21) et la zone d'enregistrement dirigée vers le bas (22) et respectivement adjacente à celle-ci.

13. Système de vision (50) selon l'une quelconque des revendications 1 à 12, dans lequel la zone d'enregistrement dirigée vers l'arrière (21) est directement adjacente à la zone d'enregistrement dirigée vers le bas (22).

14. Système de vision (50) selon l'une quelconque des revendications précédentes, dans lequel la zone d'enregistrement dirigée vers le bas (22) contient un habillage de véhicule, de préférence une arête arrière de véhicule (18) ou un pare-chocs.
